# EUROPEAN PATENT SPECIFICATION

(11) **EP 4 525 248 B1**
(45) Date of publication and mention of the grant of the patent: **28.10.2026**
(21) Application number: 23197808.1
(22) Date of filing: 15.09.2023
(51) Int. Cl.: H02J 3/1807, H02J 3/001, H02H 9/02

(54) **IMPROVEMENTS RELATING TO POWER SUPPLY NETWORKS**
VERBESSERUNGEN IN BEZUG AUF STROMVERSORGUNGSNETZE
AMÉLIORATIONS RELATIVES À DES RÉSEAUX D'ALIMENTATION ÉLECTRIQUE

(43) Date of publication of application: 19.03.2025
(73) Proprietor: GE Vernova Technology GmbH, 5400 Baden (CH)
(72) Inventor: SKLIUTAS, John, 12345 Schenectady (US)
(74) Representative: Openshaw & Co.

(56) References cited:
- CN-A- 116 191 395

## Description

### Field

The subject matter herein relates generally to the field of power supply networks and more specifically to electrical assemblies and methods for operating power supply networks.

### Introduction

Power supply networks are used to provide electrical power from power generation networks to consumers. The power supply network tends to operate at a number of different alternating current (AC) voltages. Typically, the AC voltages are transformed from higher voltages to lower voltages as the electrical power progresses through the power supply network.

Increasingly, power supply networks are expanding to include more transmission lines and are also receiving electrical power from additional generation sources including renewable power installations. The latter includes wind, solar, battery, pumped hydro, and geo-thermal power generation installations. The integration of renewable power generation sources has presented certain challenges for power supply network operators seeking to manage power flow through the power supply network to a consumer.

CN116191395A discloses an improved micro-controllable fixed series compensation device with overcurrent protection, which comprises a general fixed series capacitor compensation device, an inductor group adjusting circuit and an overcurrent protection circuit which are sequentially connected in series, and two ends of the micro-controllable fixed series compensation device are connected in parallel with an isolating switch.

### Summary

The operation of a modern-day power transmission system may encounter different challenges during the day, during the week, or for extended periods of time. These challenges can include: 1) periods of excessive short circuit currents, 2) periods of lower short circuit currents (i.e., weak grids) (often associated with lower power flows and larger voltage variations), 3) the need to improve the power quality at voltage sensitive loads by minimizing voltage dips during local faults, and 4) the need to adjust power flow in parallel connected transmission circuits as required to avoid equipment (line and/or station) overloading during normal or contingency conditions or preventing power flow loops.

Short circuit currents in power supply networks are increasing due to several factors including additional transmission lines, new thermal generation, as well as the connection of renewable power generation networks, such as large windfarms and solar farms. As a result, in some transmission stations, the short circuit interrupting rating of existing circuit breakers are approaching, or in some circumstances exceeding, their limits. The installation of higher-rated circuit breakers is the normal course of action but can prove disruptive (in terms of cost and integration) to deploy within existing power supply networks. For instance, a power provider cannot just upgrade one circuit breaker in a power supply network - it is generally the case that all circuit breakers must be upgraded to have the new electrical rating. Furthermore, higher-rated circuit breakers may not be available for the levels of short circuit current at the operating voltage of the power supply station required.
There is also concern among utility providers that certain renewable power generation networks can be inconsistent or variable with their electrical power supply. By way of example and considering a solar power generation network, during the day the electrical power supplied from the solar power generation network may be substantive (and short circuit currents may be relatively high), but during the night the electrical power supplied will be much lower (and accordingly, the short circuit currents will be lower). This leads to a scenario whereby the demand for protection from short circuit currents increases and decreases at different times of the day. Furthermore, the power supply network may resultantly be weaker at night, leading to voltage regulation issues and/or decreased power flows.

Faults within a power supply network and/or power generation network, can cause voltage dips (or, in some instances, even voltages going as low as zero volts). For voltage sensitive loads, such as paper mills, refineries, computer chip factories, data centres, military installations, and critical government complexes, limiting voltage dips at the entrance to the plant can prevent the interruption of internal plant processes.

Furthermore, other operational challenges may arise when managing a transmission grid such as adjusting the power flow among parallel connected transmission lines, minimizing power loop flows, and reducing power flow on lines operating near, or at, thermal limits.

It is therefore desirable to provide electrical assemblies and methods of operation for power supply networks, that can mitigate these issues.

According to a first aspect, there is provided an electrical assembly, comprising: a first electrical point of connection and a second electrical point of connection, for connecting, respectively, to a transmission means of an alternating current (AC) network; a first subcircuit electrically connected, in series, between the first and second electrical points of connection, the first subcircuit comprising: a capacitor means; a first reactor means, electrically connected between the capacitor means and the first electrical point of connection, the first reactor means being in series with the capacitor means; a second reactor means, electrically connected between the capacitor means and the second electrical point of connection, the second reactor means being in series with the capacitor means; a first switching means, electrically connected in parallel with the first reactor means, wherein the first switching means is operable between a first conducting state and a first non-conducting state, to respectively bypass or include the first reactor means in the first subcircuit; a second switching means, electrically connected in parallel with the second reactor means, wherein the second switching means is operable between a second conducting state and a second non-conducting state, to respectively bypass or include the second reactor means in the first subcircuit; a second subcircuit, electrically connected in parallel with the capacitor means, the second subcircuit comprising a varistor means; a third subcircuit, electrically connected in parallel with the second subcircuit, the third subcircuit comprising: a third switching means, the third switching means being operable between a third conducting state and a third non-conducting state, to respectively connect or disconnect the third subcircuit of the electrical assembly; wherein the electrical assembly further comprises a third reactor means, the third reactor means being either electrically connected in series with the capacitor means or electrically connected in series with the third switching means as part of the third subcircuit.

The inventor has realized that the problems discussed herein can be solved by providing a multi-function electrical assembly that can adapt to power network conditions, maximizing power network performance. This is achieved by providing the first, second and third switching means, that can be individually operated to either insert or bypass electrical components of the electrical assembly. The electrical assembly can be reconfigured to provide fault current limiting (FCL), fault dip limiting (FDL), a series capacitor (SC), or a power flow modifier (PFM). The electrical assembly tends to be operated in any of these configurations from minutes to months, for instance. Compared to the cost of separate electrical assemblies for each purpose, the electrical assembly disclosed herein offers significant cost savings. Further, the electrical assembly disclosed herein can be retrofitted to existing hardware (i.e., existing series-capacitor banks) to allow for the conversion of the existing hardware to provide the multifunction FCL/FDL/SC/PFM arrangement. The capacitor means may account for up to more than one-half of the cost of the electrical assembly, so being able to retrofit this solution to existing capacitor banks in power supply networks tends to be particularly financially attractive, as well as only requiring a modest increase in spatial footprint.

Some embodiments further comprise: a fourth switching means, electrically connected in series with the first subcircuit, between the first subcircuit and the first electrical point of connection, the fourth switching means being operable between a fourth conducting state and a fourth non-conducting state, to respectively connect or disconnect the first subcircuit from the first electrical point of connection; and a fifth switching means, electrically connected in series with the first subcircuit, between the first subcircuit and the second electrical point of connection, the fifth switching means being operable between a fifth conducting state and a fifth non-conducting state, to respectively connect of disconnect the first subcircuit from the second electrical point of connection.

By providing the fourth and fifth switching means, the electrical assembly can be connected or disconnected from the AC network to which it is deployed. This allows the electrical assembly to be taken out of service when required.

Some embodiments further comprise: a fourth subcircuit, electrically connecting the first electrical point of connection to the second electrical point of connection, wherein the fourth subcircuit comprises: a sixth switching means, the sixth switching means being operable between a sixth conducting state and a sixth non-conducting state, to respectively bypass or include the first, second, and third subcircuits of the electrical assembly.

By providing the fourth subcircuit, the electrical assembly can not only be taken out of service when required, but the electrical connection between the first and second electrical points of connection can be established directly, by configuring the sixth switching means into the sixth conducting state. Hence the electrical assembly can be completely bypassed when required.

In some embodiments, the fourth and fifth switching means are configured in the respective fourth and fifth conducting states, and the first, second, third and sixth switching means are configured in the respective first, second, third and sixth non-conducting states, such that the electrical assembly operates as a fault current limiter (FCL) and/or a fault dip limiter (FDL).

When operating as an FCL (i.e., in scenarios where the AC network is 'strong'), both of the first and second reactor means and the capacitor means are in service with a resonant frequency equal to a frequency of the electrical power being transmitted through the power network, such that the voltage drop across the electrical assembly is nearly zero, except for voltage drop across equipment resistance, thus not affecting load flow. In the event of a local fault, the capacitor-means is partially bypassed by the varistor means. In some embodiments, a triggered airgap may also be provided, in which case the capacitor means tends to be completely bypassed thus leaving the first and second reactor means to limit any short circuit currents. This tends to protect circuit breakers and/or switchgear from being overloaded by excessive fault/short circuit currents. Hence, the existing circuit breakers, switches, and electrical bus, can remain in service and operate within their limits.

The FDL configuration is the same configuration as the FCL and acts to provide power quality to a local load. This tends to ensure that a retained voltage at a voltage sensitive load is maximized and will experience limited voltage dips when the FDL is connected between an electrical fault and the voltage sensitive load. Put differently, the FDL configuration improves power quality to electrical loads and to parallel connected circuits (i.e., at a power station/AC network bus).

In some embodiments, the first, second, fourth, and fifth switching means are configured in the respective first, second, fourth and fifth conducting states, and the third and sixth switching means are configured in the respective third and sixth non-conducting states, such that the electrical assembly operates as a series-capacitor (SC).

Operating as a SC, the electrical assembly tends to strengthen the AC network by increasing power flow on the transmission means. This can mitigate voltage regulation issues that may be experienced across a day, for instance, during the night when electrical grid is weaker when solar power generation is negligible.

In some embodiments, the third, fourth, and fifth switching means are configured in the respective third, fourth and fifth conducting states, the sixth switching means is configured in the sixth non-conducting state, and at least one of the first and second switching means are configured in the respective first and second non-conducting states (i.e., with at least one conducting reactor) such that the electrical assembly operates as a power flow modifier (PFM).

In the PFM configuration the capacitor-means is bypassed. The series-reactance of the electrical assembly is increased to decrease power flow in the transmission means. The electrical assembly provides the option to connect one or two reactor means in series with the transmission means. This tends to be advantageous where the relative power flow requires adjusting between a plurality of parallel transmission lines of the transmission means. The PFM configuration may also be used to minimize power loop flows and reduce power flow on transmission lines operating at, or near, thermal limits.

In some embodiments, the sixth switching means is configured in the sixth conducting state, and the fourth and fifth switching means are configured in the respective fourth and fifth non-conducting states, such that the electrical assembly operates in an out-of-service state.

As hereinbefore described, the out-of-service state allows the electrical assembly to be completely bypassed when required i.e., electrical power flowing through the transmission means will bypass the electrical assembly.

Some embodiments further comprise: a controller means configured to provide respective control signals to the first, second, third, fourth, fifth, and sixth, switching means, to operate the first, second, third, fourth, fifth and sixth switching means between their respective conducting and non-conducting states.

The controller means provides the control signals that may be used to operate the switching means of the electrical assembly. The controller means may automatically control the switching means of the electrical assembly. The controller means may provide an interface for an operator to control the switching means of the electrical assembly. The controller means may comprise one or more processors and a memory coupled with the processor, for instance, wherein the memory comprises instructions that when executed by the processor, cause the controller means to operate the switching means.

In some embodiments, the varistor means comprises a metal-oxide varistor (MOV). The MOV absorbs power and energy when a fault current flows through the electrical assembly. The MOV can operate passively and autonomously.

In some embodiments, the first, second and third reactor means comprise respective air-core, iron-core or oil-filled reactors. Whilst the reactor means may comprise oil filled reactors, these can be expensive to manufacture and deploy but maybe the only option when high reactance and/or high currents are required. 'Dry' reactors or air-core reactors are therefore preferred if requirements can be met with an air-core type design.

In some embodiments, the third subcircuit further comprises a triggered gap and/or a power electronics.

The triggered air gap and/or power electronics allows for a reduction in the size of the varistor means (i.e., the MOV). This is because the electrical rating of the varistor means can be reduced. Put differently, the use of a triggered air gap and/or power electronics can reduce the cost and spatial size of the varistor means. The triggered air gap normally operates autonomously once pre-firing conditions measured on the platform reach set thresholds or can be operated from a ground generated signal allowing capacitor bypass when required to limit short circuit contribution. The power electronics may, for instance, comprise Thyristor technologies. By providing the triggered air gap and/or power electronics (i.e., in series with the third reactor means), if the triggered air gap and/or power electronics are in a conductive state, the electrical power will still pass through the third reactor means.

According to a second aspect, there is provided an AC network, comprising: a transmission means; and the electrical assembly of the first aspect, wherein the first and second electrical points of connection are electrically connected to the transmission means.

It is anticipated that the deployment of the electrical assembly will tend to comprise providing the capacitor means on an insulated platform, given that the capacitor means tends to be at the voltage of the transmission means. The reactor means (of the first and third subcircuits) may be physically located to the side of the insulated platform.

In some embodiments, the first and second electrical points of connection are electrically connected in series to one or more transmission lines of the transmission means. Alternatively, the first and second electrical points of connection are electrically connected to split an electrical bus or busses of the transmission means (i.e., transmission station), into two or more sections. An electrical station may be configured as a single bus or multiple busses. Either arrangement provides a solution to limit short circuit currents experienced in the AC network/station. The location of deployment may determine the quantity of the electrical assemblies required and hence the power/utility provider may select the most appropriate deployment location considering factors, such as, construction footprint.

In some embodiments, the AC network is configured to operate at: an AC voltage between distribution voltage and ultra-high voltage (UHV), more preferably above 100kV, even more preferably between 100 kV and 765 kV. The invention described herein tends to be applicable to any AC voltage between distribution and ultra-high voltage (UHV). The most practical applications are expected at HV and EHV while UHV is 765 kV. In this case, HV is defined as 100 kV to 345 kV (nominal) and EHV is defined as 345 kV to 765 kV (nominal) voltages.

In some embodiments, the AC network comprises multiple generation sources including conventional generation as well as renewable power generation network, more preferably a solar power generation network or a wind power generation network. As described herein, the electrical assembly tends to provide a solution to the short circuit current problems being experienced by any power supply networks that are connected to conventional or renewable power generation networks.

According to a third aspect, there is provided a method of operating an electrical assembly in an AC network, the method comprising: providing the electrical assembly of the first aspect; electrically connecting the first and second electrical points of connection to a transmission means of an AC network; and then operating at least the first, second, and third switching means.

According to a fourth aspect, there is provided a method of assembling an electrical assembly for an AC network, the method comprising: providing first and second electrical points of connection, for connecting to a transmission means of an AC network; assembling a first subcircuit to be electrically connected in series between the first and second electrical points of connection, wherein the assembling the first subcircuit comprises: providing a capacitor means; electrically connecting a first reactor means between the capacitor means and the first electrical point of connection, the first reactor means being in series with the capacitor means; electrically connecting a second reactor means between the capacitor means and the second electrical point of connection, the second reactor means being in series with the capacitor means; electrically connecting a first switching means in parallel with the first reactor means, the first switching means being operable between a first conducting state and a first non-conducting state, to respectively bypass or include the first reactor means in the first subcircuit; electrically connecting a second switching means in parallel with the second reactor means, the second switching means being operable between a second conducting state and a second non-conducting state, to respectively bypass or include the second reactor in the first subcircuit; assembling a second subcircuit to be electrically connected in parallel with the capacitor means, wherein the assembling the second subcircuit comprises: providing a varistor means; assembling a third subcircuit to be electrically connected in parallel with the second subcircuit, wherein the assembling the third subcircuit comprises: providing a third reactor means; providing a third switching means, the third switching means being operable between a third conducting state and a third non-conducting state, to respectively connect or disconnect the third subcircuit in the electrical assembly; wherein the third reactor means is either electrically connected in series with the capacitor means or electrically connected in series with the third switching means as part of the third subcircuit.

In some embodiments, the method further comprises: electrically connecting a fourth switching means in series with the first subcircuit, and between the first subcircuit and the first electrical point of connection, wherein the fourth switching means is operable between a fourth conducting state and a fourth non-conducting state, to respectively connect or disconnect the first subcircuit from the first electrical point of connection; electrically connecting a fifth switching means in series with the first subcircuit, and between the first subcircuit and the second electrical point of connection, wherein the fifth switching means is operable between a fifth conducting state and a fifth non-conducting state, to respectively connect or disconnect the first subcircuit from the second electrical point of connection; and assembling a fourth subcircuit electrically connecting the first electrical point of connection to the second electrical point of connection, wherein the assembling the fourth subcircuit comprises: electrically connecting a sixth switching means, the sixth switching means being operable between a sixth conducting state and a sixth non-conducting state, to respectively bypass or include the first, second and third subcircuits in the electrical assembly.

It will be appreciated that particular features of different aspects of the invention share the technical effects and benefits of corresponding features of other aspects of the invention. More specifically, the AC network, method of use, and method of assembly, share the technical effects and benefits of the electrical assembly of the invention.

The invention as described herein tends, in series capacitor mode (SC), to strengthen the AC network/AC grid. If the grid is strong and if short circuit currents are excessive, the invention described herein tends to help limit short circuit currents and operate in the fault current limiter (FCL) mode. If there are lines operating in parallel which require adjustments in load flow, the invention described herein tends to operate in power flow modifier (PFM) mode. An additional benefit to FCL operation tends to be that a fault dip limiter (FDL) operation occurs at the same time and station busses and loads are separated from the fault location by the FDL and the load will experience limited voltage dips.

The invention described herein tends to provide a solution to limit short circuit currents when breaker replacement with higher interrupting ratings is not an option i.e., when breakers with higher interrupting ratings do not exist in the marketplace because they have not yet been developed.

The invention described herein tends to be effective at limiting short circuit currents with installation in two different station locations: 1) splitting one or more station busses into 2 or more sections or 2) connecting the assembly in series with one or more transmission lines. The station location tends to affect the quantity of units required and the utility company can select the best option for their station considering factors such as available construction footprint.

The invention described herein tends to be constructed separate, or next to, an operating substation or transmission line such as to not disturb the existing AC grid. When completed, the electrical assembly can be connected to the station or line(s) in a few hours to a few days to minimize impact to the operating AC grid.

The invention described herein tends to allow incremental implementation. As new transmission circuits are connected to an existing power station or as new power generation projects are connected to existing lines, the electrical assembly can be installed as required to limit short circuit currents in the local station. The invention described herein tends to be an option for developers to install and mitigate the contribution of their project when the power stations are operating near circuit breaker short circuit limits. The invention described herein tends to allow incremental implementation when circuit breaker replacement is an all or nothing option.

The invention described herein tends to be able to operate with an MOV or with an MOV with triggered air gap. The MOV is a passive design and operates autonomously. On the other hand, the triggered air gap also operates autonomously but also has the option to fire from ground which would enable a user to bypass one or multiple series capacitor(s) within the electrical assembly by using a command, provided initial triggering conditions are met to limit short circuit contribution from more than one circuit at a time, thus maximizing the current limiting effect.

The invention described herein is a modest-cost upgrade to the existing series capacitor banks present in AC networks/power stations.

For completeness, the technical advantages of the invention described herein are not intended to be limiting.

It will also be appreciated that the use of the terms "first" and "second", and the like, are merely intended to help distinguish between similar features and are not intended to indicate a relative importance of one feature over another, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### Brief description of the drawings

Embodiments of the invention will now be described by way of example only and with reference to the accompanying drawings, in which:
Figure 1 shows generically, an example of a power transmission network;
Figure 2 shows an embodiment of a controller;
Figure 3 shows an example of an electrical assembly useful for understanding the invention.
Figure 4 shows an embodiment of an electrical assembly;
Figure 5 shows a further embodiment of an electrical assembly;
Figure 6 shows an embodiment of a method of using an electrical assembly; and
Figure 7 shows an embodiment of a method of assembling an electrical assembly.

### Detailed description

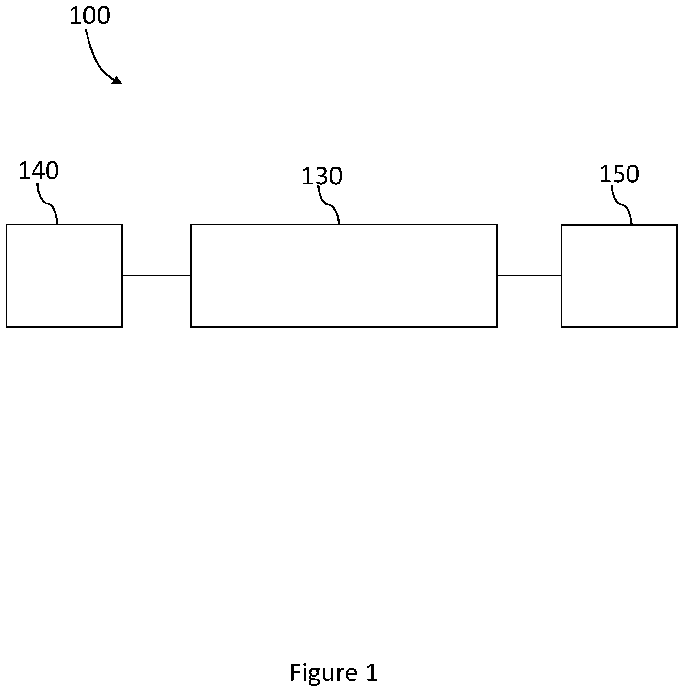

Figure 1 illustrates generically, an example of a power transmission network 100. The illustration is not intended to be limited to representing a particular power transmission scheme, but is moreover provided as a generic example illustrating principles of operation of a power transmission network that are useful for understanding the invention. In this manner, the power transmission network 100 may represent, generically, an AC scheme, or may represent a multiterminal power transmission scheme, for instance. It is considered that Figure 1 and the associated description are useful for understanding certain aspects and/or context of the invention.

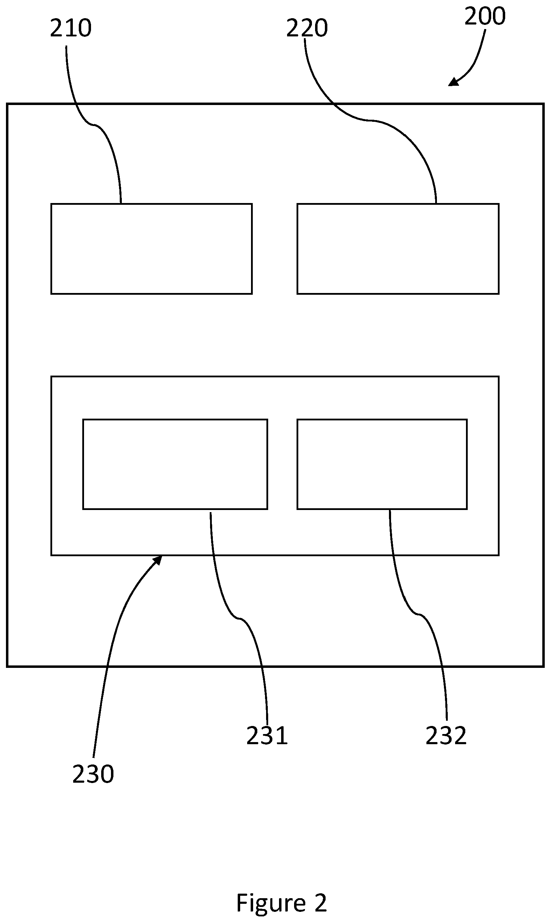

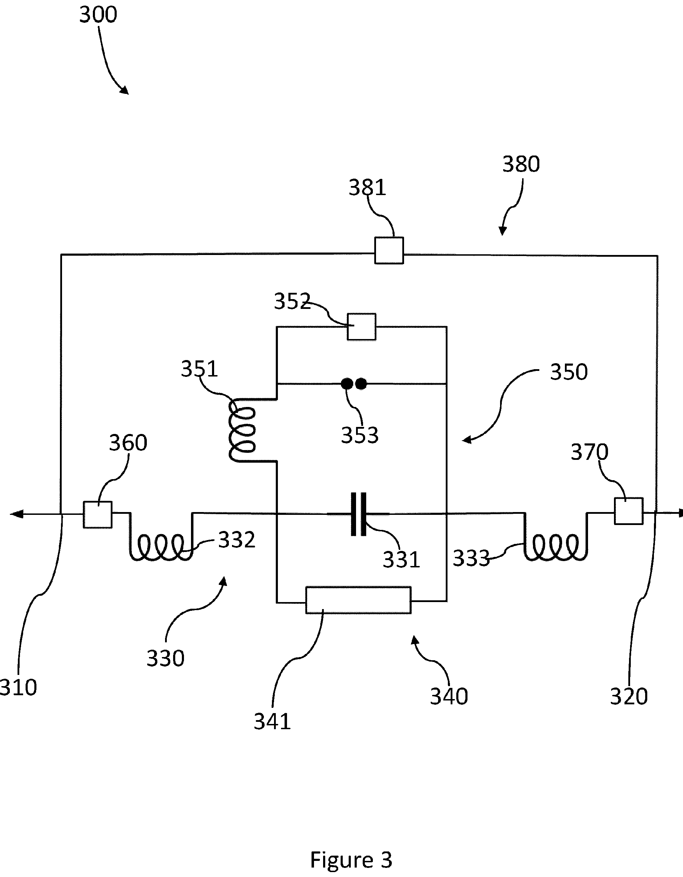

Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the controller 200 of Figure 2, the electrical assemblies 300 and 400 of Figures 3-4, and to AC networks wherein the methods 500 and 600 are used.

The power transmission network 100 illustrates a first AC network 140 and a second AC network 150. The first AC network 140 and/or second AC network 150 may be electrical power transmission systems comprising power generation apparatus, transmission apparatus, distribution apparatus, and electrical loads. The first AC network 140 and/or second AC network 150 may comprise conventional power generation sources such as coal, gas, hydro etc, or renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance. The AC networks 140, 150 may be AC networks within which the electrical assemblies 300, 400, are deployed, or within which the methods 500, 600 are exercised, for instance.

Also illustrated is a power transmission medium 130 interconnecting the AC networks 140, 150. The power transmission medium 130 may comprise electrical cables, transmission lines, and other electrical components interconnecting the AC networks 140, 150. The power transmission medium 130 provides the medium through which AC power is transmitted between the AC networks 140, 150.

The operation of the power transmission system 100 can be generically described as follows. The first AC power generation network 140 generates AC power that is provided over the power transmission medium 130 to the second AC network 150 for consumption, for instance.

It will be appreciated that various other electrical components may be located at any particular location or with any particular feature/component in the example 100. These may include switches, transformers, reactors, surge arresters, harmonic filters, and other components well known in the art.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by symmetrical components: a positive sequence component; a negative sequence component; and a zero-sequence component. It is the positive sequence component that rotates in phase in accordance with the power system. Hence, in the idealistic scenario, only positive sequence voltage/current will exist. It will be understood that an unbalance in voltage or current between the first, second, and third-phases, of a three-phase system, in magnitude or phase angle, can give rise to undesirable negative and/or zero-sequence components. Such an unbalance can be caused by fault conditions, unbalanced loads, and non-transposed transmission lines, for instance in the AC networks 140, 150.

Either of AC networks 140, 150, may constitute a power supply network within which the invention described herein is deployed/operates. Various different voltage levels can exist when transformers are used to connect systems with different operating voltages while electrical circuits may be connected within the AC networks 140, 150 using switches or circuit breakers. These circuit breakers tend to be designed to have a maximum interrupting short-circuit current rating that is higher than the maximum short circuit current that may flow in the corresponding electrical circuit. This allows the circuit breaker/switch to be opened in the case of a fault, so that the short circuit current can be interrupted.

As described herein, power supply networks continue to expand with new conventional generation plants and new transmission circuits as well as receiving electrical power from renewable power generation networks. These include wind and solar power generation networks. All these additions increase short circuit currents to an extent that the short circuit interrupting rating of existing circuit breakers are approaching, or in some circumstances, exceeding their limits. The solution described herein tends to provide a solution to mitigating this issue.

Figure 2 illustrates an embodiment of a controller 200 as may be used in some embodiments of the invention described herein.

The controller 200 comprises a memory 210 and at least one processor 220. The memory 210 comprises computer-readable instructions, which when executed by the at least one processor 220, can cause the controller 200 to perform embodiments of the method/s described herein.

The controller 200 is illustrated as comprising a transceiver arrangement 230 which may comprise a separate transmitter 231 and receiver 232. The transceiver arrangement 230 may be used to operatively communicate with other components or features of embodiments described herein either directly or via a further interface such as a network interface. The transceiver arrangement 230 may for instance send and receive control signals using transmitter 231 and receiver 232. The control signals may contain or define electrical control parameters such as reference currents or reference voltages or commands, for instance for switching means, switches, etc.

The at least one processor 220 is capable of executing computer-readable instructions and/or performing logical operations. The at least one processor 220 may be a microcontroller, microprocessor, central processing unit (CPU), field programmable gate array (FPGA), or similar programmable controller. The controller may further comprise a user input device and/or output device. The processor 220 is communicatively coupled to the memory 210 and may in certain embodiments be coupled to the transceiver 230.

The memory 210 may be a computer readable storage medium. For instance, the memory 210 may include a non-volatile computer storage medium. For example, the memory 210 may include a hard disk drive, flash memory etc.

Whilst not illustrated, the controller 200 may additionally include a user input device interface and/or a user output device interface, which may allow for visual, audible or haptic inputs/outputs. Examples include interfaces to electronic displays, touchscreens, keyboards, mice, speakers and microphones.

Figure 3 shows an example of an electrical assembly 300 useful for understanding the invention.

The electrical assembly 300 comprises a first electrical point of connection 310 and a second electrical point of connection 320. The first and second electrical points of connection 310, 320, being for connecting, respectively, to a transmission means of an AC network.

A first subcircuit 330 is also shown as being electrically connected, in series, between the first and second electrical points of connection 310, 320. The first subcircuit 330 comprises a capacitor means in the form of a series capacitor 331 bank.

A first reactor means, in the form of a first reactor 332, is shown electrically connected between the capacitor 331 and the first electrical point of connection 310. The first reactor 332 is in series with the capacitor 331.

A second reactor means, in the form of a second reactor 333 is shown electrically connected between the capacitor 331 and the second electrical point of connection 320. The second reactor 333 is in series with the capacitor 331.

A second subcircuit 340 is shown electrically connected in parallel with the capacitor 331. The second subcircuit 340 comprising a metal-oxide varistor means in the form of a MOV 341.

A third subcircuit 350 is shown electrically connected in parallel with the second subcircuit 340. The third subcircuit 350 comprises a third reactor means, in the form of a third reactor 351. The third subcircuit 350 further comprises a third switching means in the form of a third switch 352 electrically connected in series with the third reactor 351. The third switch 352 being operable between a third conducting state and a third non-conducting state, to respectively connect or disconnect the third subcircuit 350 of the electrical assembly 300. The third subcircuit 350 also comprises a (optional) triggered gap 353 electrically connected in parallel with the third switch 352 and in series with the third reactor 351.

A fourth switching means in the form of a fourth switch 360 is also shown as being electrically connected in series with the first subcircuit 330. The fourth switch 360 is connected between the first subcircuit 330 and the first electrical point of connection 310. The fourth switch 360 is operable between a fourth conducting state and a fourth non-conducting state, to respectively connect or disconnect the first subcircuit 330 from the first electrical point of connection 310.

A fifth switching means in the form of a fifth switch 370 is also shown as being electrically connected in series with the first subcircuit 330. The fifth switch 370 is connected between the first subcircuit 330 and the second electrical point of connection 320. The fifth switch 370 is operable between a fifth conducting state and a fifth non-conducting state, to respectively connect of disconnect the first subcircuit 330 from the second electrical point of connection 320.

The electrical assembly 300 further comprises a fourth subcircuit 380 electrically connecting the first electrical point of connection 310 to the second electrical point of connection 320. The fourth subcircuit 380 comprises a sixth switching means in the form of a sixth switch 381. The sixth switch 381 is operable between a sixth conducting state and a sixth non-conducting state, to respectively bypass or include the first, second and third subcircuits 330, 340, 350 of the electrical assembly 300.

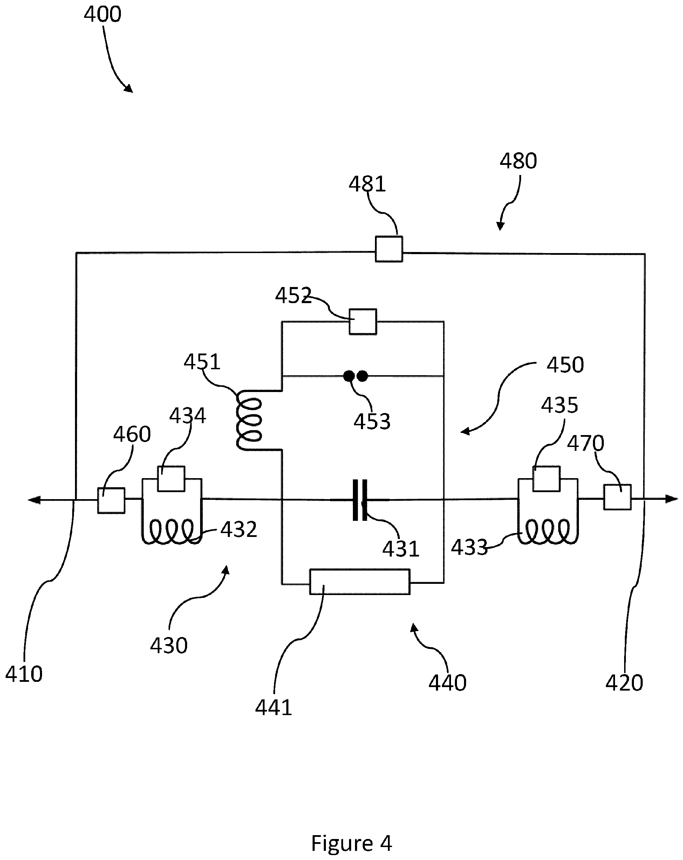

The electrical assembly 300 may be considered as a dual reactor - single capacitor, series resonant FCL/FDL. However, the functionality of the electrical assembly 300 can be further improved as shown in Figure 4.

Figure 4 shows an embodiment of an electrical assembly 400 that improves upon the electrical assembly 300 of Figure 3.

The electrical assembly 400 comprises a first electrical point of connection 410 and a second electrical point of connection 420. The first and second electrical points of connection 410, 420, being for connecting, respectively, to a transmission means of an AC network.

A first subcircuit 430 is also shown as being electrically connected, in series, between the first and second electrical points of connection 410, 420. The first subcircuit 430 comprises a capacitor means in the form of a series capacitor 431 (which may be a capacitor bank).

A first reactor means, in the form of a first reactor 432, is shown electrically connected between the capacitor 431 and the first electrical point of connection 410. The first reactor 432 is in series with the capacitor 431.

A second reactor means, in the form of a second reactor 433 is shown electrically connected between the capacitor 431 and the second electrical point of connection 420. The second reactor 433 is in series with the capacitor 431.

A first switching means in the form of a first switch 434 is shown electrically connected in parallel with the first reactor 432. The first switch 434 is operable between a first conducting state and a first non-conducting state, to respectively bypass or include the first reactor 432 in the first subcircuit 430.

A second switching means in the form of a second switch 435 is shown electrically connected in parallel with the second reactor 433. The second switch 435 is operable between a second conducting state and a second non-conducting state, to respectively bypass or include the second reactor 433 in the first subcircuit 430.

A second subcircuit 440 is shown electrically connected in parallel with the capacitor 431. The second subcircuit 440 comprising a varistor means in the form of a MOV 441.

A third subcircuit 450 is shown electrically connected in parallel with the second subcircuit 440. The third subcircuit 450 comprises a third reactor means, in the form of a third reactor 451. The third subcircuit 450 further comprises a third switching means in the form of a third switch 452 electrically connected in series with the third reactor 451. The third switch 452 being operable between a third conducting state and a third non-conducting state, to respectively connect or disconnect the third subcircuit 450 of the electrical assembly 400. The third subcircuit 450 also comprises an optional triggered gap 453 electrically connected in parallel with the third switch 452 and in series with the third reactor 451.

A fourth switching means in the form of a fourth switch 460 is also shown as being electrically connected in series with the first subcircuit 430. The fourth switch 460 is connected between the first subcircuit 430 and the first electrical point of connection 410. The fourth switch 460 is operable between a fourth conducting state and a fourth non-conducting state, to respectively connect or disconnect the first subcircuit 430 from the first electrical point of connection 410.

A fifth switching means in the form of a fifth switch 470 is also shown as being electrically connected in series with the first subcircuit 430. The fifth switch 470 is connected between the first subcircuit 430 and the second electrical point of connection 420. The fifth switch 470 is operable between a fifth conducting state and a fifth non-conducting state, to respectively connect of disconnect the first subcircuit 430 from the second electrical point of connection 420.

The electrical assembly 400 further comprises a fourth subcircuit 480 electrically connecting the first electrical point of connection 410 to the second electrical point of connection 420. The fourth subcircuit 480 comprises a sixth switching means in the form of a sixth switch 481. The sixth switch 481 is operable between a sixth conducting state and a sixth non-conducting state, to respectively bypass or include the first, second and third subcircuit 430, 440, 450 of the electrical assembly 400.

When the electrical assembly 400 is in-use, the switches or breakers 434, 435, 452, 460, 470, 481, are individually operated and configured to be in either of their respective conductive or non-conductive states. The operation of the switches 434, 435, 452, 460, 470, 481, may be controlled by a controller such as the controller 200 of Figure 2. Particular configurations of the switches 434, 435, 452, 460, 470, 481 tend to be advantageous as will now be described with reference to Figure 4 and Table 1 below.

**Table 1**

| **Switch** | **SC Mode** | **FCL/FDL Mode** | **PFM Mode** | **Out of Service Mode** |
|---|---|---|---|---|
| First **-** 434 | Conducting | Non-conducting | Either* | Either |
| Second-435 | Conducting | Non-conducting | Either* | Either |
| Third-452 | Non-conducting | Non-conducting | Conducting | Either |
| Fourth -460 | Conducting | Conducting | Conducting | Non-conducting |
| Fifth-470 | Conducting | Conducting | Conducting | Non-conducting |
| Sixth -481 | Non-conducting | Non-conducting | Non-conducting | Conducting |

| | | | | |
|---|---|---|---|---|
| *In the PFM Mode, at least one of the first and second switches must be in the non-conducting (i.e., open) configuration. | | | | |

As shown in Table 1, the electrical assembly 400 can be configured to operate in an SC Mode, an FCL/FDL Mode, a PFM mode or an out of service mode. In SC mode, the electrical assembly 400 tends to strengthen an AC network. If the AC network is strong and if short circuit currents are excessive, this electrical assembly 400 can help limit short circuit currents and operate in the FCL mode. If there are lines operating in parallel which require adjustments in load flow, this electrical assembly 400 can operate in PFM mode. An additional benefit to FCL operation is that FDL operation occurs at the same time and station busses and loads upstream of the FDL tend to resultantly experience limited voltage dips during faults on the downstream side of the FDL.

It is also evident from Table 1 that certain components of the electrical assembly 400 are reused in multiple modes of operation. For instance, in the FCL mode the reactors 432 and 433 are used in addition to the series capacitor 431. In the FDL mode the reactors 432 and 433 are used in addition to the series capacitor 431. In the SC mode the series capacitor 431 is used. In the PFM mode either or both of the reactors 432 and 433 can be used. This discussion is intended to illustrate that the reactors 432 and 433, and the capacitor 431, have a high duty factor as each component is used in three out of the four described modes. Hence there can be a significant cost benefit to the multifunction electrical assembly 400 when compared to providing separate electrical assemblies for each of the described operational modes.

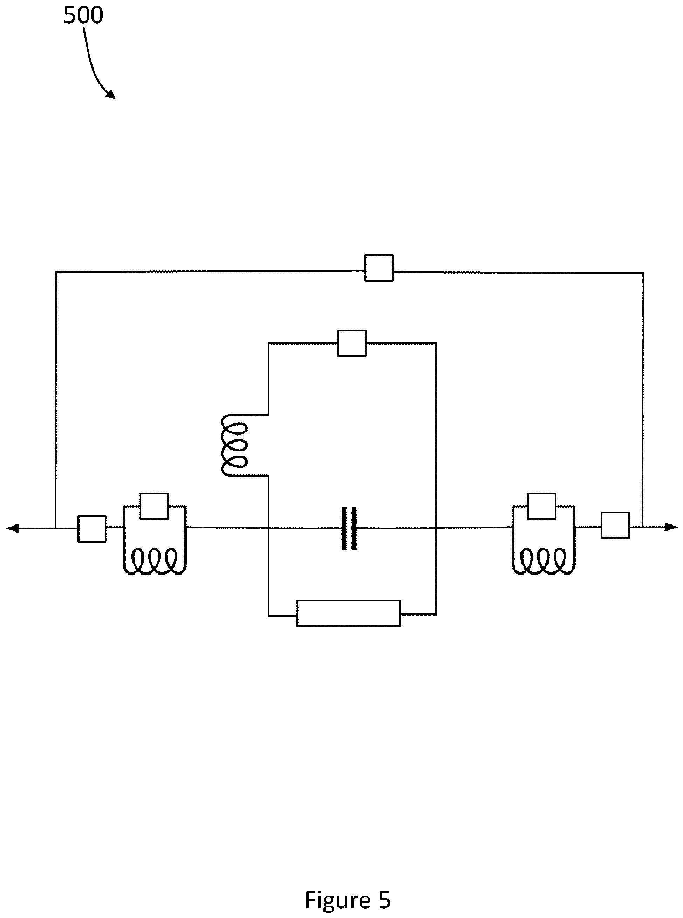

Figure 5 shows a further embodiment of an electrical assembly 500. The electrical assembly 500 replicates that of Figure 4 but omitting the triggered gap 453. The triggered gap 453 of Figure 4 may or may not be present in embodiments of the electrical assemblies described herein.

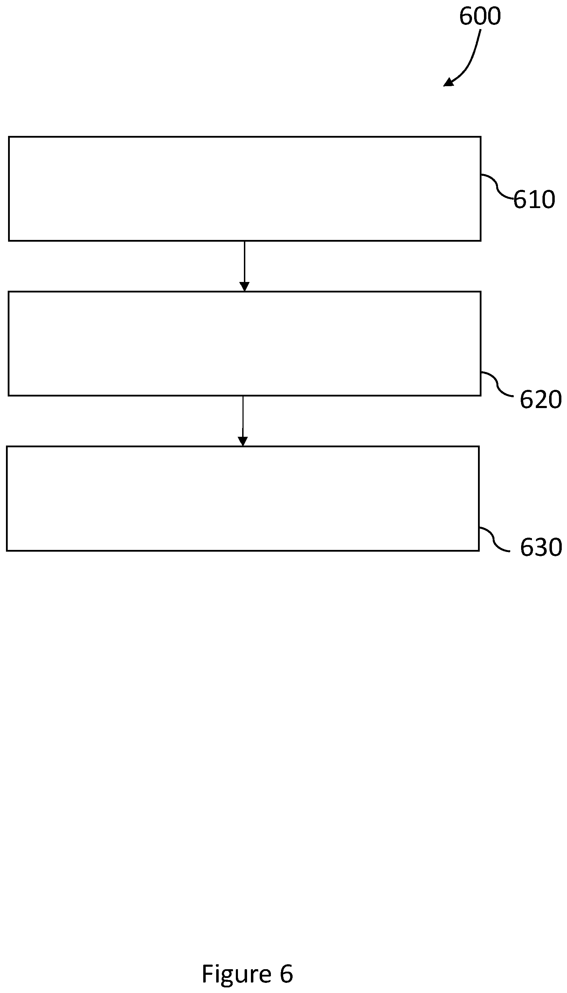

Figure 6 shows an embodiment of a method 600 of using an electrical assembly in an AC network.

A first step 610 comprises providing the electrical assembly of the first aspect. This may be the electrical assembly 400 of Figure 4, or the electrical assembly 500 of Figure 5, for instance.

A further step 620 comprises electrically connecting the first and second electrical points of connection to a transmission means of an AC network. The first and second electrical points of connection may be the electrical points of connection 410, 420, for instance.

A further step 630 comprises operating at least the first, second and/or third switching means. This may comprise operating the switches 434, 435, 452, 460, 470, 481, for instance. The operation of the switches may be performed by a controller, for instance the controller 200 of Figure 2.

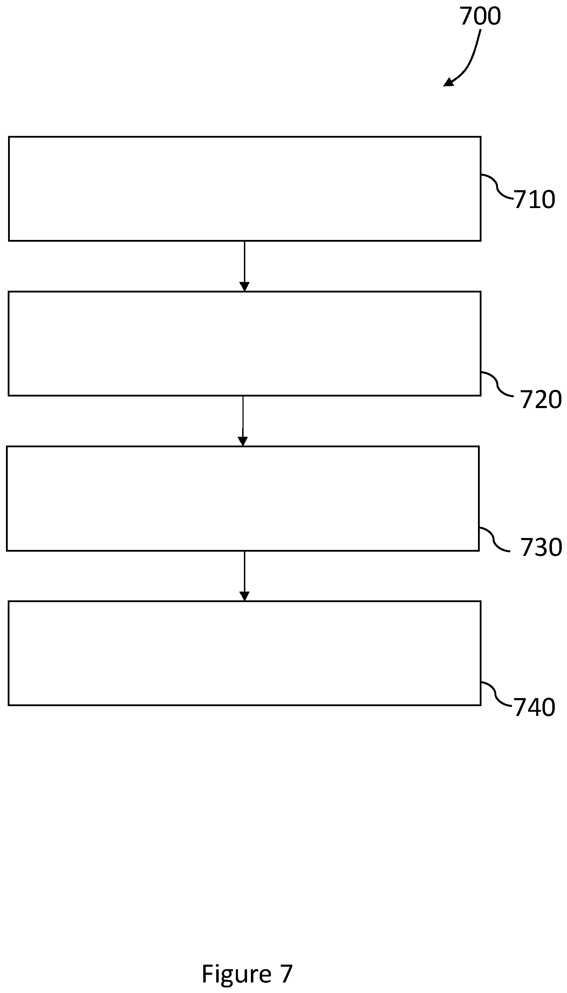

Figure 7 shows an embodiment of a method 700 of assembling an electrical assembly in an AC network.

A first step 710 comprises providing first and second electrical points of connection, for connecting to a transmission means of an AC network.

A further step 720 comprises assembling a first subcircuit to be electrically connected in series between the first and second electrical points of connection, wherein the assembling the first subcircuit comprises: providing a capacitor means; electrically connecting a first reactor means between the capacitor means and the first electrical point of connection, the first reactor means being in series with the capacitor means; electrically connecting a second reactor means between the capacitor means and the second electrical point of connection, the second reactor means being in series with the capacitor means; electrically connecting a first switching means in parallel with the first reactor means, the first switching means being operable between a first conducting state and a first non-conducting state, to respectively bypass or include the first reactor means in the first subcircuit; electrically connecting a second switching means in parallel with the second reactor means, the second switching means being operable between a second conducting state and a second non-conducting state, to respectively bypass or include the second reactor in the first subcircuit.

A further step 730 comprises assembling a second subcircuit to be electrically connected in parallel with the capacitor means, wherein the assembling the second subcircuit comprises: providing a varistor means.

A further step 740 comprises assembling a third subcircuit to be electrically connected in parallel with the second subcircuit, wherein the assembling the third subcircuit comprises: providing a third reactor means; providing a third switching means, the third switching means being operable between a third conducting state and a third non-conducting state, to respectively connect or disconnect the third subcircuit in the electrical assembly; wherein the third reactor means is either electrically connected in series with the capacitor means or electrically connected in series with the third switching means as part of the third subcircuit.

Whilst the embodiments described herein may refer to a capacitor means, it will be understood that such a term can include a capacitor, a plurality of capacitors, a capacitor bank and/or other capacitive means.

Whilst the embodiments described herein may refer to reactor means, it be understood that such a term can include a reactor, a plurality of reactors, oil-filled reactors, air-core reactors, and/or other reactor means providing the function of a reactor.

Whilst the embodiments described herein may refer to a controller means, it will be understood that such a term can include a controller, a plurality of controllers, at least one processor and a memory, the controller of Figure 2, and/or other controller means providing the function of a controller.

Whilst the embodiments described herein may refer to switching means, it will be understood that such a term can include a switch, a plurality of switches, switchgear, circuit breakers and/or other switching means providing the function of switching between a conducting and non-conducting state.

Whilst the embodiments described herein may refer to varistor means, it will be understood that such a term can include a varistor, a plurality of varistors, and/or other varistor means providing the function of a varistor.

Whilst the embodiments described herein may refer to switches in conductive states, it will be understood that such a term means the switch is in a closed state i.e., that electrical power can flow through the switch. Similarly, switches in non-conductive states will be understood to be in an open state i.e., that electrical power cannot flow through the switch.

The invention described herein tends to have the advantage of using circuit breakers or switches to insert or bypass various components to create the option to operate in one of 4 modes: 1) series capacitor (SC), 2) fault current limiter (FCL), 3) fault dip limiter (FDL), and 4) power flow modifier (PFM).

Other options may exist for providing each operating mode, separately. The benefits of a SC can also be achieved by adding parallel connected transmission lines and/or adding phase-shifting transformer(s). The benefit of an FCL can be achieved by replacing circuit breakers, ground switches, and bus with higher ratings, if available, or adding series reactors which will affect load flow and voltage profiles usually in a negative way. The benefits of an FDL at the plant level can be solved within a plant with sensitive loads by using equipment such as UPS's (uninterruptable power supplies) or voltage boosting transformers (transformer with power electronics to rapidly compensate for voltage dips. One main driver for the FDL decision is the quantity and cost of devices within a plant that require power conditioning. It is also feasible to use a single capacitor - single reactor FCL/FDL versus a dual reactor - single capacitor FCL/FDL (as shown in Figure 4 or 5), however the temporary overvoltages are not the same for faults between the capacitor and reactor compared to the dual reactor - single capacitor design provided herein. However, the multifunctionality of the electrical assembly described herein, and the ability to retrofit the assembly to existing components of AC networks, offers significant benefits beyond that which individual separate solutions can provide.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions /acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. An electrical assembly (400, 500), comprising:
a first electrical point of connection (410) and a second electrical point of connection (420), for connecting, respectively, to a transmission means of an alternating current 'AC' network;
a first subcircuit (430) electrically connected, in series, between the first and second electrical points of connection, the first subcircuit comprising:
a capacitor means (431);
a first reactor means (432), electrically connected between the capacitor means and the first electrical point of connection, the first reactor means being in series with the capacitor means;
a second reactor means (433), electrically connected between the capacitor means and the second electrical point of connection, the second reactor means being in series with the capacitor means;
a first switching means (434), electrically connected in parallel with the first reactor means, wherein the first switching means is operable between a first conducting state and a first non-conducting state, to respectively bypass or include the first reactor means in the first subcircuit;
a second switching means (435), electrically connected in parallel with the second reactor means, wherein the second switching means is operable between a second conducting state and a second non-conducting state, to respectively bypass or include the second reactor means in the first subcircuit;
a second subcircuit (440), electrically connected in parallel with the capacitor means, the second subcircuit comprising a varistor means (441);
a third subcircuit (450), electrically connected in parallel with the second subcircuit, the third subcircuit comprising:
a third switching means (452), the third switching means being operable between a third conducting state and a third non-conducting state, to respectively connect or disconnect the third subcircuit of the electrical assembly;
wherein the electrical assembly further comprises a third reactor means (451), the third reactor means being either electrically connected in series with the capacitor means or being electrically connected in series with the third switching means as part of the third subcircuit.

2. The electrical assembly of claim 1, further comprising:
a fourth switching means (460), electrically connected in series with the first subcircuit, between the first subcircuit and the first electrical point of connection, the fourth switching means being operable between a fourth conducting state and a fourth non-conducting state, to respectively connect or disconnect the first subcircuit from the first electrical point of connection; and
a fifth switching means (470), electrically connected in series with the first subcircuit, between the first subcircuit and the second electrical point of connection, the fifth switching means being operable between a fifth conducting state and a fifth non-conducting state, to respectively connect of disconnect the first subcircuit from the second electrical point of connection.

3. The electrical assembly of claim 2, further comprising:
a fourth subcircuit (480), electrically connecting the first electrical point of connection to the second electrical point of connection, wherein the fourth subcircuit comprises:
a sixth switching means (481), the sixth switching means being operable between a sixth conducting state and a sixth non-conducting state, to respectively bypass or include the first, second and third subcircuits of the electrical assembly.

4. The electrical assembly of claim 3, wherein either:
the fourth and fifth switching means are configured in the respective fourth and fifth conducting states, and the first, second, third and sixth switching means are configured in the respective first, second, third and sixth non-conducting states, such that the electrical assembly operates as a fault current limiter 'FCL' and/or a fault dip limiter 'FDL';
the first, second, fourth, and fifth switching means are configured in the respective first, second, fourth and fifth conducting states, and the third and sixth switching means are configured in the respective third and sixth non-conducting states, such that the electrical assembly operates as a series-capacitor 'SC';
the third, fourth, and fifth switching means are configured in the respective third, fourth and fifth conducting states, the sixth switching means is configured in the sixth non-conducting state, and at least one of the first and second switching means are configured in the respective first and second non-conducting state, such that the electrical assembly operates as a power flow modifier 'PFM'; or
the sixth switching means is configured in the sixth conducting state, the fourth and fifth switching means are configured in the respective fourth and fifth non-conducting states, such that the electrical assembly operates in an out-of-service state.

5. The electrical assembly of any one of claims 3-4, further comprising:
a controller means (200) configured to provide respective control signals to the first, second, third, fourth, fifth, and sixth, switching means, to operate the first, second, third, fourth, fifth and sixth switching means between their respective conducting and non-conducting states.

6. The electrical assembly of any preceding claim, wherein:
the varistor means comprises a metal-oxide varistor 'MOV'.

7. The electrical assembly of any preceding claim, wherein:
the first, second and third reactor means comprise respective air-core, iron-core, or oil-filled reactors.

8. The electrical assembly of any preceding claim, wherein the third subcircuit further comprises a triggered gap (453) and/or a power electronics.

9. An AC network (140, 150), comprising:
a transmission means (130); and
the electrical assembly of any preceding claim, wherein first and second electrical points of connection are electrically connected to the transmission means.

10. The AC network of claim 9, wherein:
the first and second electrical points of connection are electrically connected in series to one or more transmission lines of the transmission means; or
the first and second electrical points of connection are electrically connected to split an electrical bus or busses of the transmission means, into two or more sections.

11. The AC network of any one of claims 9-10, configured to operate at:
an AC voltage between distribution voltage and ultra-high voltage 'UHV', more preferably above 100kV, even more preferably between 100 kV and 765 kV.

12. The AC network of any one of claims 9-11, where the AC network comprises a renewable power generation network, more preferably a solar power generation network or a wind power generation network.

13. A method (600) of operating an electrical assembly in an AC network, the method comprising:
providing (610) the electrical assembly of any preceding claim;
electrically connecting (620) the first and second electrical points of connection to a transmission means of an AC network; and then
operating (630) at least the first, second and/or third switching means.

14. A method (700) of assembling an electrical assembly for an AC network, the method comprising:
providing (710) first and second electrical points of connection, for connecting to a transmission means of an AC network;
assembling (720) a first subcircuit to be electrically connected in series between the first and second electrical points of connection, wherein the assembling the first subcircuit comprises:
providing a capacitor means;
electrically connecting a first reactor means between the capacitor means and the first electrical point of connection, the first reactor means being in series with the capacitor means;
electrically connecting a second reactor means between the capacitor means and the second electrical point of connection, the second reactor means being in series with the capacitor means;
electrically connecting a first switching means in parallel with the first reactor means, the first switching means being operable between a first conducting state and a first non-conducting state, to respectively bypass or include the first reactor means in the first subcircuit;
electrically connecting a second switching means in parallel with the second reactor means, the second switching means being operable between a second conducting state and a second non-conducting state, to respectively bypass or include the second reactor in the first subcircuit;
assembling (730) a second subcircuit to be electrically connected in parallel with the capacitor means, wherein the assembling the second subcircuit comprises:
providing a varistor means;
assembling (740) a third subcircuit to be electrically connected in parallel with the second subcircuit, wherein the assembling the third subcircuit comprises:
providing a third reactor means;
providing a third switching means, the third switching means being operable between a third conducting state and a third non-conducting state, to respectively connect or disconnect the third subcircuit in the electrical assembly; wherein the third reactor means is either electrically connected in series with the capacitor means or electrically connected in series with the third switching means as part of the third subcircuit.

15. The method of claim 14, further comprising:
electrically connecting a fourth switching means in series with the first subcircuit, and between the first subcircuit and the first electrical point of connection, wherein the fourth switching means is operable between a fourth conducting state and a fourth non-conducting state, to respectively connect or disconnect the first subcircuit from the first electrical point of connection;
electrically connecting a fifth switching means in series with the first subcircuit, and between the first subcircuit and the second electrical point of connection, wherein the fifth switching means is operable between a fifth conducting state and a fifth non-conducting state, to respectively connect or disconnect the first subcircuit from the second electrical point of connection; and
assembling a fourth subcircuit electrically connecting the first electrical point of connection to the second electrical point of connection, wherein the assembling the fourth subcircuit comprises:
electrically connecting a sixth switching means, the sixth switching means being operable between a sixth conducting state and a sixth non-conducting state, to respectively bypass or include the first, second and third subcircuits in the electrical assembly.

## Patentansprüche

1. Elektrische Baugruppe (400, 500), umfassend:
einen ersten elektrischen Verbindungspunkt (410) und einen zweiten elektrischen Verbindungspunkt (420) zum jeweiligen Verbinden mit einem Übertragungsmittel eines Wechselstrom 'AC'-Netzes;
eine erste Teilschaltung (430), welche in Reihe zwischen dem ersten und dem zweiten elektrischen Verbindungspunkt elektrisch verbunden ist, wobei die erste Teilschaltung umfasst:
ein Kondensatormittel (431);
ein erstes Drosselmittel (432), welches zwischen dem Kondensatormittel und dem ersten elektrischen Verbindungspunkt elektrisch verbunden ist, wobei das erste Drosselmittel mit dem Kondensatormittel in Reihe geschaltet ist;
ein zweites Drosselmittel (433), welches zwischen dem Kondensatormittel und dem zweiten elektrischen Verbindungspunkt elektrisch verbunden ist, wobei das zweite Drosselmittel mit dem Kondensatormittel in Reihe geschaltet ist;
ein erstes Schaltmittel (434), welches parallel zu dem ersten Drosselmittel elektrisch verbunden ist, wobei das erste Schaltmittel zwischen einem ersten leitenden Zustand und einem ersten nichtleitenden Zustand betrieben werden kann, um das erste Drosselmittel in der ersten Teilschaltung zu umgehen bzw. einzuschließen;
ein zweites Schaltmittel (435), welches parallel zu dem zweiten Drosselmittel elektrisch verbunden ist, wobei das zweite Schaltmittel zwischen einem zweiten leitenden Zustand und einem zweiten nichtleitenden Zustand betrieben werden kann, um das zweite Drosselmittel in der ersten Teilschaltung zu umgehen bzw. einzuschließen;
eine zweite Teilschaltung (440), welche parallel zu dem Kondensatormittel elektrisch verbunden ist, wobei die zweite Teilschaltung ein Varistormittel (441) umfasst;
eine dritte Teilschaltung (450), welche parallel zu der zweiten Teilschaltung elektrisch verbunden ist, wobei die dritte Teilschaltung umfasst:
ein drittes Schaltmittel (452), wobei das dritte Schaltmittel zwischen einem dritten leitenden Zustand und einem dritten nichtleitenden Zustand betrieben werden kann, um die dritte Teilschaltung der elektrischen Baugruppe zu verbinden bzw. zu trennen;
wobei die elektrische Baugruppe weiter ein drittes Drosselmittel (451) umfasst, wobei das dritte Drosselmittel entweder in Reihe mit dem Kondensatormittel elektrisch verbunden ist oder in Reihe dem dritten Schaltmittel als Teil der dritten Teilschaltung elektrisch verbunden ist.

2. Elektrische Baugruppe nach Anspruch 1, weiter umfassend:
ein viertes Schaltmittel (460), welches in Reihe mit der ersten Teilschaltung zwischen der ersten Teilschaltung und dem ersten elektrischen Verbindungspunkt elektrisch verbunden ist, wobei das vierte Schaltmittel zwischen einem vierten leitenden Zustand und einem vierten nichtleitenden Zustand betrieben werden kann, um die erste Teilschaltung mit der dem ersten elektrischen Verbindungspunkt zu verbinden bzw. davon zu trennen; und
ein fünftes Schaltmittel (470), welches in Reihe mit der ersten Teilschaltung zwischen der ersten Teilschaltung und dem zweiten elektrischen Verbindungspunkt elektrisch verbunden ist, wobei das fünfte Schaltmittel zwischen einem fünften leitenden Zustand und einem fünften nichtleitenden Zustand betrieben werden kann, um die erste Teilschaltung mit der dem zweiten elektrischen Verbindungspunkt zu verbinden bzw. davon zu trennen.

3. Elektrische Baugruppe nach Anspruch 2, weiter umfassend:
eine vierte Teilschaltung (480), welche den ersten elektrischen Verbindungspunkt mit dem zweiten elektrischen Verbindungspunkt elektrisch verbindet, wobei die vierte Teilschaltung umfasst:
ein sechstes Schaltmittel (481), wobei das sechste Schaltmittel zwischen einem sechsten leitenden Zustand und einem sechsten nichtleitenden Zustand betrieben werden kann, um die erste, zweite und dritte Teilschaltung der elektrischen Baugruppe zu umgehen bzw. einzuschließen.

4. Elektrische Baugruppe nach Anspruch 3, wobei entweder:
das vierte und fünfte Schaltmittel im jeweiligen vierten und fünften leitenden Zustand konfiguriert sind, und das erste, zweite, dritte und sechste Schaltmittel im jeweiligen ersten, zweiten, dritten und sechsten nichtleitenden Zustand konfiguriert sind, sodass die elektrische Baugruppe als Fehlerstrombegrenzer 'FCL' und/oder als Stromausfallbegrenzer 'FDL' fungiert;
das erste, zweite, vierte und fünfte Schaltmittel in den jeweiligen ersten, zweiten, vierten und fünften leitenden Zuständen konfiguriert sind, und das dritte und sechste Schaltmittel in den jeweiligen dritten und sechsten nichtleitenden Zuständen konfiguriert sind, sodass die elektrische Baugruppe als Serienkondensator 'SC' fungiert;
das dritte, vierte und fünfte Schaltmittel in den jeweiligen dritten, vierten und fünften leitenden Zuständen konfiguriert sind, das sechste Schaltmittel im sechsten nichtleitenden Zustand konfiguriert ist, und zumindest eines von dem ersten und zweiten Schaltmittel im jeweiligen ersten und zweiten nichtleitenden Zustand konfiguriert sind, sodass die elektrische Baugruppe als Leistungsflussregler 'PFM' fungiert; oder
das sechste Schaltmittel im sechsten leitenden Zustand konfiguriert ist, das vierte und fünfte Schaltmittel in den jeweiligen vierten und fünften nichtleitenden Zuständen konfiguriert sind, sodass die elektrische Baugruppe in einem nicht betriebsbereiten Zustand betrieben wird.

5. Elektrische Baugruppe nach einem der Ansprüche 3-4, weiter umfassend:
ein Steuermittel (200), welches dazu konfiguriert ist, jeweilige Steuersignale für das erste, zweite, dritte, vierte, fünfte und sechste Schaltmittel bereitzustellen, um das erste, zweite, dritte, vierte, fünfte und sechste Schaltmittel zwischen ihren jeweiligen leitenden und nichtleitenden Zuständen zu betreiben.

6. Elektrische Baugruppe nach einem vorstehenden Anspruch, wobei:
das Varistormittel einen Metalloxidvaristor 'MOV' umfasst.

7. Elektrische Baugruppe nach einem vorstehenden Anspruch, wobei:
das erste, zweite und dritte Drosselmittel jeweils eine Luftdrossel, Eisendrossel oder ölgefüllte Drossel umfasst.

8. Elektrische Baugruppe nach einem vorstehenden Anspruch, wobei die dritte Teilschaltung weiter eine Triggerfunkenstrecke (453) und/oder Leistungselektronik umfasst:

9. Wechselstromnetz (140, 150), umfassend:
ein Übertragungsmittel (130); und
die elektrische Baugruppe nach einem vorstehenden Anspruch, wobei der erste und zweite elektrische Verbindungspunkt mit dem Übertragungsmittel elektrisch verbunden sind.

10. Wechselstromnetz nach Anspruch 9, wobei:
der erste und zweite elektrische Verbindungspunkt in Reihe mit einer oder mehreren Übertragungsleitungen des Übertragungsmittels elektrisch verbunden sind; oder
der erste und zweite elektrische Verbindungspunkt elektrisch verbunden sind, um eine elektrische Sammelschiene oder Sammelschienen des Übertragungsmittels in zwei oder mehr Abschnitte zu unterteilen.

11. Wechselstromnetz nach einem der Ansprüche 9-10, konfiguriert zum Betrieb mit:
einer Wechselspannung zwischen Versorgungsspannung und Höchstspannung 'UHV', bevorzugter über 100 kV, besonders bevorzugt zwischen 100 kV und 765 kV.

12. Wechselstromnetz nach einem der Ansprüche 9-11, wobei das Wechselstromnetz ein Netz zur Erzeugung erneuerbarer Energien, bevorzugter ein Solarstromnetz oder ein Windkraftnetz, umfasst.

13. Verfahren (600) zum Betreiben einer elektrischen Baugruppe in einem Wechselstromnetz, wobei das Verfahren umfasst:
Bereitstellen (610) der elektrischen Baugruppe nach einem vorstehenden Anspruch;
elektrisches Verbinden (620) des ersten und zweiten elektrischen Verbindungspunkts mit einem Übertragungsmittel eines Wechselstromnetzes; und dann
Betreiben (630) zumindest des ersten, zweiten und/oder dritten Schaltmittels.

14. Verfahren (700) zum Montieren einer elektrischen Baugruppe für ein Wechselstromnetz, wobei das Verfahren umfasst:
Bereitstellen (710) vom ersten und zweiten elektrischen Verbindungspunkt zum Verbinden mit einem Übertragungsmittel eines Wechselstromnetzes;
Montieren (720) einer ersten Teilschaltung, um in Reihe zwischen dem ersten und dem zweiten elektrischen Verbindungspunkt elektrisch verbunden zu sein, wobei das Montieren der ersten Teilschaltung umfasst:
Bereitstellen eines Kondensatormittels;
elektrisches Verbinden eines ersten Drosselmittels zwischen dem Kondensatormittel und dem ersten elektrischen Verbindungspunkt, wobei das erste Drosselmittel mit dem Kondensatormittel in Reihe geschaltet ist;
elektrisches Verbinden eines zweiten Drosselmittels zwischen dem Kondensatormittel und dem zweiten elektrischen Verbindungspunkt, wobei das zweite Drosselmittel mit dem Kondensatormittel in Reihe geschaltet ist;
elektrisches Verbinden eines ersten Schaltmittels parallel zu dem ersten Drosselmittel, wobei das erste Schaltmittel zwischen einem ersten leitenden Zustand und einem ersten nichtleitenden Zustand betrieben werden kann, um das erste Drosselmittel in der ersten Teilschaltung zu umgehen bzw. einzuschließen;
elektrisches Verbinden eines zweiten Schaltmittels parallel zu dem zweiten Drosselmittel, wobei das zweite Schaltmittel zwischen einem zweiten leitenden Zustand und einem zweiten nichtleitenden Zustand betrieben werden kann, um das zweite Drosselmittel in der ersten Teilschaltung zu umgehen bzw. einzuschließen;
Montieren (730) einer zweiten Teilschaltung, um parallel zu dem Kondensatormittel elektrisch verbunden zu sein, wobei das Montieren der zweiten Teilschaltung umfasst:
Bereitstellen eines Varistormittels;
Montieren (740) einer dritten Teilschaltung, um parallel zu der zweiten Teilschaltung elektrisch verbunden zu sein, wobei das Montieren der dritten Teilschaltung umfasst:
Bereitstellen eines dritten Drosselmittels;
Bereitstellen eines dritten Schaltmittels, wobei das dritte Schaltmittel zwischen einem dritten leitenden Zustand und einem dritten nichtleitenden Zustand betrieben werden kann, um die dritte Teilschaltung in der elektrischen Baugruppe zu verbinden bzw. zu trennen; wobei das dritte Drosselmittel entweder in Reihe mit dem Kondensatormittel elektrisch verbunden ist oder in Reihe dem dritten Schaltmittel als Teil der dritten Teilschaltung elektrisch verbunden ist.

15. Verfahren nach Anspruch 14, weiter umfassend:
elektrisches Verbinden eines vierten Schaltmittels in Reihe mit der ersten Teilschaltung und zwischen der ersten Teilschaltung und dem ersten elektrischen Verbindungspunkt, wobei das vierte Schaltmittel zwischen einem vierten leitenden Zustand und einem vierten nichtleitenden Zustand betrieben werden kann, um die erste Teilschaltung mit der dem ersten elektrischen Verbindungspunkt zu verbinden bzw. davon zu trennen;
elektrisches Verbinden eines fünften Schaltmittels in Reihe mit der ersten Teilschaltung und zwischen der ersten Teilschaltung und dem zweiten elektrischen Verbindungspunkt, wobei das fünfte Schaltmittel zwischen einem fünften leitenden Zustand und einem fünften nichtleitenden Zustand betrieben werden kann, um die erste Teilschaltung mit der dem zweiten elektrischen Verbindungspunkt zu verbinden bzw. davon zu trennen; und
Montieren einer vierten Teilschaltung, welche den ersten elektrischen Verbindungspunkt mit dem zweiten elektrischen Verbindungspunkt elektrisch verbindet, wobei das Montieren der vierten Teilschaltung umfasst:
elektrisches Verbinden eines sechsten Schaltmittels, wobei das sechste Schaltmittel zwischen einem sechsten leitenden Zustand und einem sechsten nichtleitenden Zustand betrieben werden kann, um die erste, zweite und dritte Teilschaltung in der elektrischen Baugruppe zu umgehen bzw. einzuschließen.

## Revendications

1. Ensemble électrique (400, 500), comprenant :
un premier point de connexion électrique (410) et un deuxième point de connexion électrique (420) pour la connexion respectivement à un moyen de transmission d'un réseau « CA » de courant alternatif ;
un premier sous-circuit (430) connecté électriquement en série entre les premier et deuxième points de connexion électriques, le premier sous-circuit comprenant :
un moyen de condensateur (431) ;
un premier moyen de réacteur (432), connecté électriquement entre le moyen de condensateur et le premier point de connexion électrique, le premier moyen de réacteur étant en série avec le moyen de condensateur ;
un deuxième moyen de réacteur (433), connecté électriquement entre le moyen de condensateur et le deuxième point de connexion électrique, le deuxième moyen de réacteur étant en série avec le moyen de condensateur ;
un premier moyen de commutation (434), connecté électriquement en parallèle avec le premier moyen de réacteur, dans lequel le premier moyen de commutation peut fonctionner entre un premier état conducteur et un premier état non conducteur, pour respectivement contourner ou inclure le premier moyen de réacteur dans le premier sous-circuit ;
un deuxième moyen de commutation (435), connecté électriquement en parallèle avec le deuxième moyen de réacteur, dans lequel le deuxième moyen de commutation peut fonctionner entre un deuxième état conducteur et un deuxième état non conducteur, pour respectivement contourner ou inclure le deuxième moyen de réacteur dans le premier sous-circuit ;
un deuxième sous-circuit (440), connecté électriquement en parallèle avec le moyen de condensateur, le deuxième sous-circuit comprenant un moyen de varistance (441) ;
un troisième sous-circuit (450), connecté électriquement en parallèle avec le deuxième sous-circuit, le troisième sous-circuit comprenant :
un troisième moyen de commutation (452), le troisième moyen de commutation pouvant fonctionner entre un troisième état conducteur et un troisième état non conducteur pour respectivement connecter ou déconnecter le troisième sous-circuit de l'ensemble électrique ;
dans lequel l'ensemble électrique comprend en outre un troisième moyen de réacteur (451), le troisième moyen de réacteur étant soit connecté électriquement en série avec le moyen de condensateur, soit connecté électriquement en série avec le troisième moyen de commutation comme faisant partie du troisième sous-circuit.

2. Ensemble électrique selon la revendication 1, comprenant en outre :
un quatrième moyen de commutation (460), connecté électriquement en série avec le premier sous-circuit, entre le premier sous-circuit et le premier point de connexion électrique, le quatrième moyen de commutation pouvant fonctionner entre un quatrième état conducteur et un quatrième état non conducteur, pour respectivement connecter ou déconnecter le premier sous-circuit du premier point de connexion électrique ; et
un cinquième moyen de commutation (470), connecté électriquement en série avec le premier sous-circuit, entre le premier sous-circuit et le deuxième point de connexion électrique, le cinquième moyen de commutation pouvant fonctionner entre un cinquième état conducteur et un cinquième état non conducteur, pour respectivement connecter ou déconnecter le premier sous-circuit du deuxième point de connexion électrique.

3. Ensemble électrique selon la revendication 2, comprenant en outre :
un quatrième sous-circuit (480), connectant électriquement le premier point de connexion électrique au deuxième point de connexion électrique, dans lequel le quatrième sous-circuit comprend :
un sixième moyen de commutation (481), le sixième moyen de commutation pouvant fonctionner entre un sixième état conducteur et un sixième état non conducteur, pour respectivement contourner ou inclure les premier, deuxième et troisième sous-circuits de l'assemblage électrique.

4. Ensemble électrique selon la revendication 3, dans lequel soit :
les quatrième et cinquième moyens de commutation sont configurés dans les quatrième et cinquième états conducteurs respectifs, et les premier, deuxième, troisième et sixième moyens de commutation sont configurés dans les premier, deuxième, troisième et sixième états non conducteurs respectifs, de sorte que l'ensemble électrique fonctionne comme un limiteur de courant de défaut « FCL » et/ou un limiteur de creux de défaut « FDL » ;
les premier, deuxième, quatrième et cinquième moyens de commutation sont configurés dans les premier, deuxième, quatrième et cinquième états conducteurs respectifs, et les troisième et sixième moyens de commutation sont configurés dans les troisième et sixième états non conducteurs respectifs, de sorte que l'ensemble électrique fonctionne comme un condensateur série « SC » ;
les troisième, quatrième et cinquième moyens de commutation sont configurés dans les troisième, quatrième et cinquième états conducteurs respectifs, le sixième moyen de commutation est configuré dans le sixième état non conducteur, et au moins un des premier et deuxième moyens de commutation est configuré dans les premier et deuxième états non conducteurs respectifs, de sorte que l'ensemble électrique fonctionne comme un modificateur de flux de puissance « PFM » ; ou
le sixième moyen de commutation est configuré dans le sixième état conducteur, les quatrième et cinquième moyens de commutation sont configurés dans les quatrième et cinquième états non conducteurs respectifs, de sorte que l'ensemble électrique fonctionne dans un état hors service.

5. Ensemble électrique selon l'une quelconque des revendications 3-4, comprenant en outre :
un moyen de dispositif de commande (200) configuré pour fournir des signaux de commande respectifs aux premier, deuxième, troisième, quatrième, cinquième et sixième moyens de commutation, pour faire fonctionner les premier, deuxième, troisième, quatrième, cinquième et sixième moyens de commutation entre leurs états conducteurs et non conducteurs respectifs.

6. Ensemble électrique selon une quelconque revendication précédente, dans lequel :
le moyen de varistance comprend une varistance à oxyde métallique « MOV ».

7. Ensemble électrique selon une quelconque revendication précédente, dans lequel :
les premier, deuxième et troisième moyens de réacteur comprennent des réacteurs à noyau d'air, à noyau de fer ou remplis d'huile respectifs.

8. Ensemble électrique selon une quelconque revendication précédente, dans lequel le troisième sous-circuit comprend en outre un intervalle déclenché (453) et/ou une électronique de puissance.

9. Réseau CA (140, 150), comprenant :
un moyen de transmission (130) ; et
l'ensemble électrique selon une quelconque revendication précédente, dans lequel les premier et deuxième points de connexion électriques sont connectés électriquement au moyen de transmission.

10. Réseau CA selon la revendication 9, dans lequel :
les premier et deuxième points de connexion électrique sont connectés électriquement en série à une ou plusieurs lignes de transmission du moyen de transmission ; ou
les premier et deuxième points de connexion électrique sont connectés électriquement pour diviser un ou des bus électriques du moyen de transmission en deux ou plusieurs sections.

11. Réseau CA selon l'une quelconque des revendications 9-10, configuré pour fonctionner à :
une tension CA entre la tension de distribution et la très haute tension « UHV », de préférence supérieure à 100 kV, encore plus préférentiellement entre 100 kV et 765 kV.

12. Réseau CA selon l'une quelconque des revendications 9-11, où le réseau CA comprend un réseau de génération d'énergie renouvelable, de préférence un réseau de génération d'énergie solaire ou un réseau de génération d'énergie éolienne.

13. Procédé (600) de fonctionnement d'un ensemble électrique dans un réseau CA, le procédé comprenant :
la fourniture (610) de l'ensemble électrique selon une quelconque revendication précédente ;
la connexion électrique (620) des premier et deuxième points de connexion électrique à un moyen de transmission d'un réseau CA ; puis
le fonctionnement (630) d'au moins les premier, deuxième et/ou troisième moyens de commutation.

14. Procédé (700) d'assemblage d'un ensemble électrique pour un réseau CA, le procédé comprenant :
la fourniture (710) de premier et deuxième points de connexion électriques, pour la connexion à un moyen de transmission d'un réseau CA ;
l'assemblage (720) d'un premier sous-circuit destiné à être connecté électriquement en série entre les premier et deuxième points de connexion électriques, dans lequel l'assemblage du premier sous-circuit comprend :
la fourniture d'un moyen de condensateur ;
la connexion électrique d'un premier moyen de réacteur entre le moyen de condensateur et le premier point de connexion électrique, le premier moyen de réacteur étant en série avec le moyen de condensateur ;
la connexion électrique d'un deuxième moyen de réacteur entre le moyen de condensateur et le deuxième point de connexion électrique, le deuxième moyen de réacteur étant en série avec le moyen de condensateur ;
la connexion électrique d'un premier moyen de commutation en parallèle avec le premier moyen de réacteur, le premier moyen de commutation pouvant fonctionner entre un premier état conducteur et un premier état non conducteur, pour respectivement contourner ou inclure le premier moyen de réacteur dans le premier sous-circuit ;
la connexion électrique d'un deuxième moyen de commutation en parallèle avec le deuxième moyen de réacteur, le deuxième moyen de commutation pouvant fonctionner entre un deuxième état conducteur et un deuxième état non conducteur, pour respectivement contourner ou inclure le deuxième réacteur dans le premier sous-circuit ;
l'assemblage (730) d'un deuxième sous-circuit à connecter électriquement en parallèle avec le moyen de condensateur, dans lequel l'assemblage du deuxième sous-circuit comprend :
la fourniture d'un moyen de varistance ;
l'assemblage (740) d'un troisième sous-circuit à connecter électriquement en parallèle avec le deuxième sous-circuit, dans lequel l'assemblage du troisième sous-circuit comprend :
la fourniture d'un troisième moyen de réacteur ;
la fourniture d'un troisième moyen de commutation, le troisième moyens de commutation pouvant fonctionner entre un troisième état conducteur et un troisième état non conducteur pour respectivement connecter ou déconnecter le troisième sous-circuit dans l'ensemble électrique ; dans lequel le troisième moyen de réacteur est soit connecté électriquement en série avec le condensateur, soit connecté électriquement en série avec le troisième moyen de commutation comme faisant partie du troisième sous-circuit.

15. Procédé selon la revendication 14, comprenant en outre :
la connexion électrique d'un quatrième moyen de commutation en série avec le premier sous-circuit, et entre le premier sous-circuit et le premier point de connexion électrique, dans lequel le quatrième moyen de commutation peut fonctionner entre un quatrième état conducteur et un quatrième état non conducteur, pour respectivement connecter ou déconnecter le premier sous-circuit du premier point de connexion électrique ;
la connexion électrique d'un cinquième moyen de commutation en série avec le premier sous-circuit, et entre le premier sous-circuit et le deuxième point de connexion électrique, dans lequel le cinquième moyen de commutation peut fonctionner entre un cinquième état conducteur et un cinquième état non conducteur, pour respectivement connecter ou déconnecter le premier sous-circuit du deuxième point de connexion électrique ; et
l'assemblage d'un quatrième sous-circuit connectant électriquement le premier point de connexion électrique au deuxième point de connexion électrique, dans lequel l'assemblage du quatrième sous-circuit comprend :
la connexion électrique d'un sixième moyen de commutation, le sixième moyen de commutation pouvant fonctionner entre un sixième état conducteur et un sixième état non conducteur, pour respectivement contourner ou inclure les premier, deuxième et troisième sous-circuits dans l'assemblage électrique.
